# EUROPÄISCHE PATENTANMELDUNG

(11) **EP 1 990 123 A2**
(43) Veröffentlichungstag der Anmeldung: **12.11.2008**
(21) Anmeldenummer: 08154861.2
(22) Anmeldetag: 21.04.2008
(51) Int. Cl.: B23K 11/26

(54) **Punktschweißverfahren, Punktschweißzange sowie Punktschweißverbindung**

(30) Priorität: 09.05.2007 DE 102007022263
(71) Anmelder: Nimak GmbH, 57537 Wissen (DE)
(72) Erfinder: Obermark, Horst R., 32107, Bad Salzuflen (DE)
(74) Vertreter: Patentanwälte Dr. Solf & Zapf

(57) **Zusammenfassung**

Die Erfindung betrifft ein Verfahren zum Punktschweißen von metallischen Bauteilen (22, 24), insbesondere für eine im Raum beweglich zu führende Schweißzange (1), wobei zwei Schweißelektroden (8, 10) unter Zwischenlage der zu verschweißenden Bauteile (22, 24) zusammengeführt werden und ein elektrischer Schweißstrom (i) über die Elektroden (8, 10) und durch die Bauteile (22, 24) geführt wird. Der Schweißstrom (i) wird durch Kondensatorentladung als Stromimpuls (30) mit einer Impulsdauer (T) von deutlich über 10 Millisekunden erzeugt. Die Erfindung betrifft ferner eine Punktschweißzange (1), bestehend aus einer Basiseinheit (2) insbesondere zur im Raum beweglichen Aufhängung, wobei die Basiseinheit (2) zwei Elektrodenarme (4, 6) mit endseitigen Schweißelektroden (8, 10) aufweist. Eine Steuerung (18) dient zur Erzeugung eines Schweißstromes (i) durch Kondensatorentladung als Stromimpuls (30) mit einer Impulsdauer (T) von deutlich über 10 Millisekunden.

## Beschreibung

Die vorliegende Erfindung betrifft zunächst ein Verfahren gemäß dem Oberbegriff des Patentanspruchs 1 zum Punktschweißen von metallischen Bauteilen.

Weiterhin betrifft die Erfindung auch eine Punktschweißzange gemäß dem Oberbegriff des Patentanspruchs 12 sowie eine Schweißverbindung von (zwei) metallischen Bauteilen nach dem Oberbegriff des Patentanspruchs 21.

Es wird bemerkt, dass sich die Erfindung hierbei insbesondere auf Punktschweißzangen bezieht, die im Raum beweglich sind, wie dies insbesondere bei Roboterschweißzangen und Handschweißzangen der Fall ist, aber auch auf stationäre Punktschweißmaschinen. Ferner betrifft die Erfindung das Verschweißen von Bauteilen, insbesondere Metallblechen, mit einer Dicke von mindestens 0,5 mm.

Es ist bekannt, beim Punktschweißen einen elektrischen Schweißstrom mit einer Stromflussdauer im Größenbereich von beispielsweise 150 ms (Millisekunden) über die Schweißelektroden durch die zu verbindenden Bauteile zu führen. Dieser relativ lange Stromfluss führt zu einem langsamen Anschmelzen der Bleche aus der Mitte des Kontaktbereiches heraus nach außen, wodurch sich eine so genannte Schweißlinse mit homogener Schmelzverbindung ausbildet. Über den im Kontaktbereich der Elektroden vorhandenen Übergangswiderstand und die daraus resultierende Stromwärme steigt die Temperatur relativ langsam an, so dass sich der Schweißpunkt mit der typischen Linsenform von innen nach außen ausbildet. Die Schweißenergie resultiert aus einem relativ hohen Strom bei relativ geringer Spannung. Durch die recht lange Stromfluss- und Erhitzungszeit ist in aller Regel eine Fremdkühlung, insbesondere Wasserkühlung, der Schweißelektroden erforderlich, was zu einem entsprechend hohen Aufwand für Kühlmittelleitungen und Kühlmittelversorgung der Schweißzange führt.

Neben dem weit verbreiteten Punktschweißen ist auch das so genannte Kondensator-Entladungsschweißen bzw. Kondensator-Impulsschweißen bekannt. Dabei wird üblicherweise mit einer sehr kurzen Impulsdauer von nur etwa 10 ms, aber mit sehr hoher Spannung von bis zu 3.500 V oder noch höher gearbeitet. Insbesondere wegen dieser hohen Spannung wird das Kondensator-Impulsschweißen nur bei stationären Schweißmaschinen eingesetzt, und zwar beim so genannten Buckelschweißen, weil wegen der hohen Spannung keine flexiblen elektrischen Leitungen verwendet werden dürfen, die aber für im Raum bewegliche Schweißvorrichtungen, wie Roboterschweißzangen oder Handschweißzangen, erforderlich wären.

Der vorliegenden Erfindung liegt die Aufgabe zu Grunde, ein Punktschweißverfahren anzugeben und eine Punktschweißzange zu schaffen, um mit konstruktiv einfachen und kostengünstigen Mitteln eine hohe Schweißqualität zu gewährleisten.

Erfindungsgemäß wird dies zunächst durch ein Verfahren gemäß dem Patentanspruch 1 erreicht. Eine erfindungsgemäße Punktschweißzange ist Gegenstand des Patentanspruchs 12. Die Erfindung führt zudem zu einer neuartigen Ausbildung der Schweißverbindung gemäß dem Patentanspruch 21.

Vorteilhafte Ausgestaltungsmerkmale und Weiterbildungen der einzelnen Erfindungsgegenstände sind in den jeweils abhängigen Ansprüchen enthalten.

Demnach wird bei dem erfindungsgemäßen Punktschweißverfahren der Schweißstrom durch Kondensatorentladung als Stromimpuls mit einer Impulsdauer von deutlich über 10 ms, z. B. mindestens 15 ms, erzeugt. Bevorzugt beträgt die Impulsdauer mindestens 20 ms, maximal aber 50 ms. Zusätzlich zu dieser - gegenüber dem bei stationären Buckelschweißmaschinen bekannten Schweißimpuls von maximal 10 ms - um z. B. 50 % oder sogar bis zu 500 % verlängerten Impulsdauer kann mit einer sehr geringen Ladespannung von maximal 500 V gearbeitet werden. Deshalb kann das Kondensator-Impulsverfahren erstmals für im Raum beweglich zu führende Schweißzangen eingesetzt werden, weil die Spannungsimpulse auch über flexible elektrische Leitungen zu dem in der Schweißzange bzw. in deren Basiseinheit untergebrachten Schweißtransformator geführt werden dürfen. Außerdem kann eine erfindungsgemäße Steuerung vorteilhafterweise mit einer üblichen, insbesondere dreiphasigen Netzspannung von 380 bzw. 400 V betrieben werden, wobei auch eine übliche 32 A -Absicherung ausreicht. Dies führt zu einer sehr universellen Einsetzbarkeit der Erfindung in allen Bereichen mit üblicher Netzspannungsversorgung.

Die erfindungsgemäße Strom-Impulsdauer von maximal 50 ms ist auf der anderen Seite aber im Vergleich zu dem bekannten Punktschweißverfahren deutlich kürzer. Deshalb kann auf eine spezielle Kühlung der Elektroden vorteilhafterweise gänzlich verzichtet werden, so dass auch der hierfür früher erforderliche Aufwand für Kühlleitungen und Kühlmittelversorgung eingespart wird.

In einer besonders vorteilhaften Ausgestaltung der Erfindung wird der Stromimpuls als Wechselimpuls mit zwei Teilimpulsen mit entgegengesetzten Polaritäten erzeugt. Dazu wird die Entladespannung über zwei nacheinander mit gegensinniger Polarität zu entladende Kondensator-Anordnungen ebenfalls als entsprechender Wechselimpuls erzeugt und dem Schweißtransformator zugeführt. Diese Maßnahme führt zu dem Vorteil, dass der Schweißtransformator während jedes Schweißvorganges und auch zwischen jeweils zwei aufeinander folgenden Schweißvorgängen je einmal ummagnetisiert wird. Hierdurch wird während jedes Schweißvorgangs die effektive Impulsdauer tatsächlich auf die Summe der Teilimpulse verlängert. Außerdem kann die Schweißleistung für jeden Schweißvorgang konstant gehalten werden. Es kann trotzdem eine nahezu unbegrenzte Schweißenergie erreicht werden.

Im Folgenden sollen anhand der Zeichnung die Erfindung, weitere vorteilhafte Ausgestaltungen sowie erreichte Vorteile beispielhaft genauer erläutert werden. Es zeigen:
- Fig. 1: eine stark vereinfachte, schematische Seitenansicht einer Schweißzange,
- Fig. 2: eine Ansicht wie in Fig. 1 während eines Schweißvorgangs mit zwei zu verbindenden (Blech-)Bauteilen,
- Fig. 3: ein Diagramm eines Schweißstromimpulses nach der Erfindung,
- Fig. 4: ein Diagramm eines Schweißstromes in einer bevorzugten Ausführung als Wechselimpuls,
- Fig.5: einen vergrößerten, schematischen Querschnitt durch die Bauteile im Bereich eines mit den erfindungsgemäßen Maßnahmen erzeugten Schweißpunktes und
- Fig. 6: ein vereinfachtes, schematisches Schaltbild einer erfindungsgemäßen Steuerung zur Generierung des Schweißstromimpulses, und zwar für die bevorzugte Ausführung als Wechselimpuls nach Fig. 4.

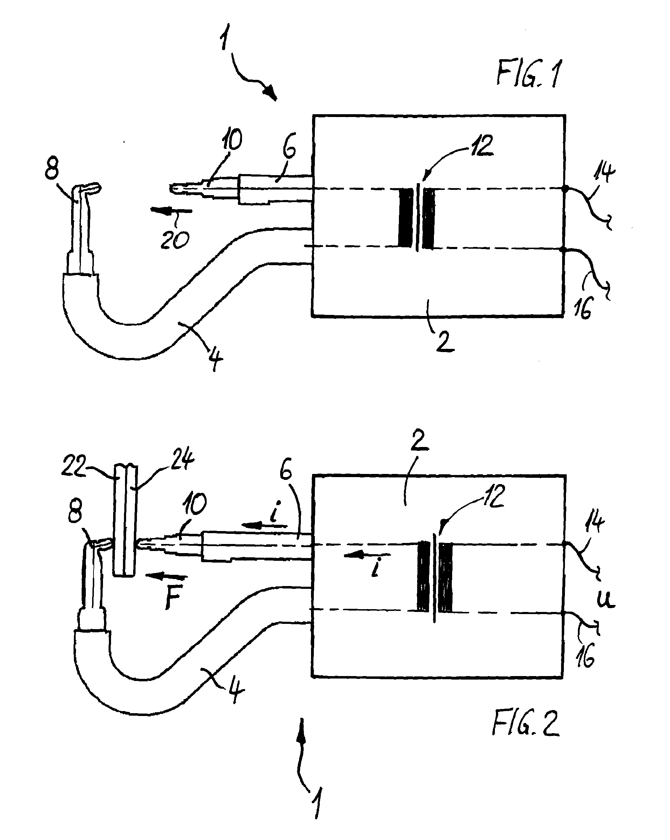

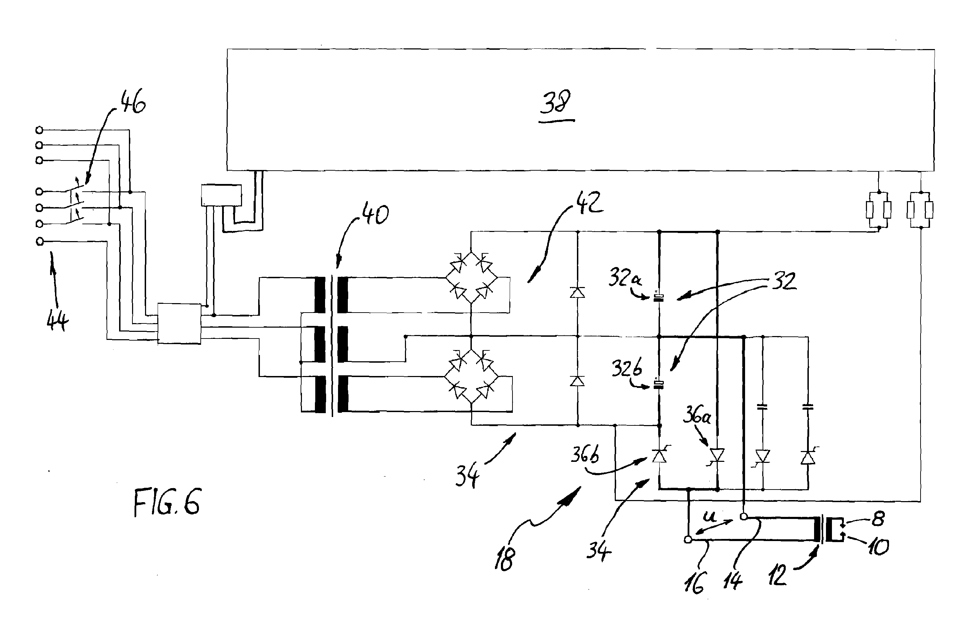

Wie in Fig. 1 und 2 stark vereinfacht dargestellt ist, besteht eine erfindungsgemäße Punktschweißzange 1 aus einer Basiseinheit 2 mit zwei Elektrodenarmen 4, 6 und an deren Enden angeordneten Schweißelektroden 8, 10. Wie dazu in Fig. 1 und 2 sowie auch in Fig. 6 schematisch dargestellt ist, sind die Schweißelektroden 8, 10 elektrisch mit einer Sekundärseite eines Schweißtransformators 12 verbunden, der innerhalb der Basiseinheit 2 angeordnet und primärseitig über flexible elektrische Leitungen 14, 16 mit einer externen, stationär anzuordnenden Schweißsteuerung 18 verbunden ist; siehe Fig. 6.

Die Punktschweißzange 1 mit der Basiseinheit 2 einschließlich der Elektrodenarme 4, 6 ist über nicht näher dargestellte Halte- und Führungsmittel - insbesondere kardanisch - im Raum beweglich geführt. Die Punktschweißzange 1 kann als Roboterschweißzange über einen Roboterarm bewegt werden. Es kann sich auch um eine Handschweißzange handeln, d. h. um eine kardanisch im Raum aufgehängte und manuell zu führende Schweißzange. Solche Punktschweißzangen 1 werden vielfach insbesondere im Automobilbau eingesetzt.

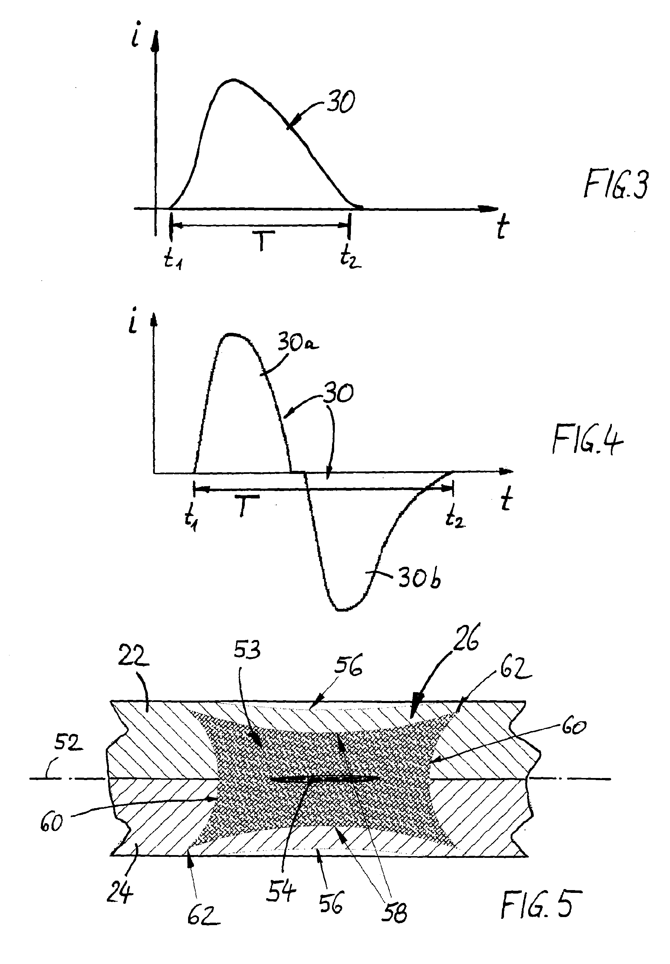

Wie sich weiter aus Fig. 1 und 2 ergibt, können die Schweißelektroden 8, 10 durch eine Bewegung wenigstens eines der Elektrodenarme, wie dargestellt z. B. durch eine Längsbewegung des Elektrodenarms 6 in Pfeilrichtung 20 (Fig. 1), unter Zwischenlage von (zwei) zu verschweißenden Bauteilen 22, 24 zusammenbewegt und mit einer Anpresskraft F beaufschlagt werden (s. Fig. 2). Es wird dann ein elektrischer Schweißstrom i über die Elektroden 8, 10 durch die Bauteile 22, 24 geführt, die dadurch erhitzt, zonal verschmolzen und somit in einem Schweißpunkt 26 (vgl. Fig. 5) stoffschlüssig miteinander verbunden (verschweißt) werden.

Erfindungsgemäß ist nun die Schweißsteuerung 18 derart konzipiert, dass sie im Zusammenwirken mit dem Schweißtransformator 12 den Schweißstrom i im Kondensator-Entladungsverfahren (Kondensator-Impulsverfahren) als Stromimpuls 30 (s. hierzu die Diagramme in Fig. 3 und 4) mit einer Impulsdauer T von über 10 ms, insbesondere mindestens 15 ms erzeugt. Vorzugsweise beträgt die Impulsdauer T mindestens 20 ms und bis zu maximal 50 ms.

Wie sich aus Fig. 6 ergibt, weist die Steuerung 18 Mittel zum Erzeugen eines Entladespannungsimpulses u durch Kondensatorentladung auf. Der Entladespannungsimpuls i wird dann über den in der Basiseinheit 2 angeordneten Schweißtransformator 12 in den Stromimpuls 30 für die Elektroden 8, 10 umgeformt. Zur Erzeugung des Entladespannungsimpulses u enthält die Steuerung 18 eine Kondensator-Anordnung 32 mit einer Lade- und Entladebeschaltung 34. Vorzugsweise wird der Stromimpuls 30 als Wechselimpuls erzeugt, der gemäß Fig. 4 aus zwei Teilimpulsen 30a und 30b mit unterschiedlicher Polarität besteht und insgesamt etwa eine vollständige Periode einer im Wesentlichen sinusförmigen Schwingung bildet. Hierzu besteht die Kondensator-Anordnung 32 aus zwei vereinfacht dargestellten Kondensatorbänken 32a, 32b, die mit zwei steuerbaren Entladeschaltern 36a, 36b derart zusammenwirken, dass sie nacheinander mit gegensinniger Polarität ihrer Entladespannungen entladbar sind. Die Entladeschalter 36a, b sind bevorzugt von Thyristoren gebildet, die von einer Steuerlogik 38 ansteuerbar sind. Die dazu vorgesehenen Steuerverbindungen sind in Fig. 6 zur Vereinfachung nicht dargestellt. Die Steuerung 18 enthält zudem als Bestandteile der Lade-/Entladebeschaltung 34 eine Transformator-Anordnung 40 und eine Gleichrichteranordnung 42, über die die Kondensator-Anordnung 32 geladen wird. Die Steuerung 18 weist eingangsseitig Speisespannungsanschlüsse 44 für eine vorzugsweise dreiphasige Eingangs-Netzspannung von insbesondere 400 V auf, wobei eine Absicherung 46 von vorzugsweise 32 A vorgesehen ist.

Der Entladespannungsimpuls u wird bezüglich seiner Impulsdauer durch die Kapazität der Kondensator-Anordnung 32 festgelegt, ist aber bezüglich seiner Amplitudenhöhe vorteilhafterweise mittels der Steuerlogik 38 einstellbar, und zwar über Variation der Höhe der Kondensator-Ladespannung. Erfindungsgemäß ist die Spannungsamplitude bis zu maximal 500 V einstellbar.

Der Schweißtransformator 12 weist eine Leistung im Bereich von 120 bis 180 kVA, insbesondere 150 kVA auf.

Für den Schweißvorgang - s. Fig. 2 - werden die Elektroden 8, 10 mit einer Anpresskraft F beaufschlagt, die im Bereich von 0,75 bis 8,0 kN liegt. Vorzugsweise wird stets eine um etwa 50 % höhere Anpresskraft F gewählt, als es bisher für "normales" Punktschweißen gemäß DVS üblich war (DVS = Deutscher Verband für Schweißtechnik e.V., s. insbesondere das Merkblatt DVS 2920). Im Übrigen werden weitere Schweißparameter, insbesondere der Stromimpuls 30, erfindungsgemäß derart vorgegeben, dass durch den Schweißvorgang die Bauteile 22, 24 über den verschmolzenen Schweißpunkt 26 verbunden werden, der dann - im Bauteil-Querschnitt gemäß Fig. 5 gesehen - eine homogene Verschmelzungszone 53 mit einer zu einer Bauteil-Verbindungsebene 52 symmetrischen und beidseitig konkaven Doppelsichelform aufweist. Gemäß Fig. 5 handelt es sich dabei um eine Form ähnlich wie zwei Teller, die mit ihren Unterseiten aneinanderliegen. Weiterhin werden die Schweißparameter so vorgegeben, dass der entstehende Schweißpunkt 26 - in einer Draufsicht der verschmolzenen Zone 53 der Bauteile 22, 24 gesehen - entweder durchgehend kreisförmig oder aber kreisringförmig mit einer zentrischen, nicht verschmolzenen Innenzone 54 ausgebildet ist. Erfindungsgemäß werden die Bauteile 22, 24 im Kontaktbereich der Elektroden 8, 10 durch den Kondensator-Stromimpuls 30 - bezogen auf eine Draufsicht des Schweißpunktes 26 - durch eine Art Koronabildung radial von außen nach innen erhitzt und aufgeschmolzen, wobei ein innerer Bereich des Schweißpunktes 26 entweder - wie in Fig. 5 dargestellt - schmelzverbindungsfrei in der Innenzone 54 bleibt oder durchgehend verschmolzen wird, indem die Schmelze im gesamten Bereich von außen nach innen durchgehend zusammenläuft.

Wie sich diesbezüglich noch aus Fig. 5 ergibt, entstehen durch das erfindungsgemäße Schweißverfahren an den Außenseiten der Bauteile 22, 24 durch die schwach konvexen Elektroden 8, 10 lediglich flache, konkave Eindrücke 56. Die Verschmelzzone 53 des Schweißpunktes 26 weist beidseitige konkave Grenzflächen 58 auf. Der Umfangsbereich der Zone 53 ist als ebenfalls konkave Umfangsgrenzfläche 60 ausgebildet. Dadurch ergeben sich zwischen den Grenzflächen 58 und der Umfangsgrenzfläche 60 im Querschnitt gesehen Eckbereiche 62.

Die beschriebene Ausgestaltung des Schweißpunktes 26 ist typisch für das erfindungsgemäße Schweißverfahren. Deshalb bezieht sich die Erfindung auch auf die Schweißverbindung von metallischen Bauteilen 22, 24 über mindestens einen Schweißpunkt 26 der hier beschriebenen Ausgestaltung.

Die Erfindung führt zu zahlreichen Vorteilen gegenüber dem bisherigen Punktschweißen. So steigt der Wirkungsgrad der Schweißung von ca. 15 % auf bis zu 90 %. Daraus resultieren erhebliche Energiesparpotentiale. Die Schweißqualität steigt durch die beträchtlich gesteigerte Prozesssicherheit. Eine früher erforderliche Ausgleichs- und Stabilisierungsphase zum Wachsen der Schweißlinse entfällt. Die Minimierung der Wärmeeinwirkung gestattet Kombinationen von Werkstoffen und Geometrien, wie sie in dieser Form zuvor allenfalls unter Anwendung des Buckelschweißens möglich waren. Durch die reduzierte Wärmeeinflusszone verringern sich vorteilhafterweise auch mögliche chemische Prozesse, wie Oxidationen. Als sehr wichtiger Vorteil ist zudem zu nennen, dass bei der Punktschweißzange 1 auf Kühlmittelleitungen verzichtet werden kann, und dass flexible elektrische Versorgungsleitungen eingesetzt werden können.

Die Erfindung ist nicht auf die dargestellten und beschriebenen Ausführungsbeispiele beschränkt, sondern umfasst auch alle im Sinne der Erfindung gleichwirkenden Ausführungen. Zudem ist die Erfindung auch nicht auf die in jedem der unabhängigen Ansprüche enthaltene Merkmalskombination beschränkt. Dies bedeutet, dass grundsätzlich jedes Einzelmerkmal eines jeden unabhängigen Anspruchs weggelassen oder durch mindestens ein an anderer Stelle der Anmeldung offenbartes Einzelmerkmal ersetzt werden kann. Insofern sind die Ansprüche lediglich als Formulierungsversuch für die Erfindung zu verstehen.

## Patentansprüche

1. Verfahren zum Punktschweißen von metallischen Bauteilen (22, 24), insbesondere für eine im Raum beweglich zu führende Schweißzange (1), wobei zwei Schweißelektroden (8, 10) unter Zwischenlage der zu verschweißenden Bauteile (22, 24) zusammengeführt werden und ein elektrischer Schweißstrom (i) über die Elektroden (8, 10) und durch die Bauteile (22, 24) geführt wird,
**dadurch gekennzeichnet, dass** der Schweißstrom (i) durch Kondensatorentladung als Stromimpuls (30) mit einer Impulsdauer (T) von deutlich über 10 Millisekunden erzeugt wird.

2. Verfahren nach Anspruch 1,
**dadurch gekennzeichnet, dass** derStromimpuls(30)miteiner Impulsdauer (T) von mindestens 15 ms, insbesondere mindestens 20 ms bis maximal 50 ms erzeugt wird.

3. Verfahren nach Anspruch 1 oder 2,
**dadurch gekennzeichnet, dass** derStromimpuls(30)als Wechselimpuls mit zwei Teilimpulsen (30a, 30b) mit entgegengesetzten Polaritäten erzeugt wird.

4. Verfahren nach einem der Ansprüche 1 bis 3,
**dadurch gekennzeichnet, dass** der Stromimpuls (30) aus einem Entladespannungsimpuls (u) über einen Schweißtransformator (12) erzeugt wird.

5. Verfahren nach Anspruch 4,
**dadurch gekennzeichnet, dass** eine Kondensator-Ladespannung zur Variation einer Elektroden-Schweißenergie einstellbar ist, und zwar insbesondere bis zu einem Maximalwert von 500 V.

6. Verfahren nach einem der Ansprüche 1 bis 5,
**dadurch gekennzeichnet, dass** der Stromimpuls (30) eine Schweißenergie von bis zu 100.000 Ws bewirkt.

7. Verfahren nach einem der Ansprüche 1 bis 6,
**dadurch gekennzeichnet, dass** der Stromimpuls (30) mittels einer Steuerung (18) erzeugt wird, die insbesondere mit einer dreiphasigen Eingangs-Netzspannung von maximal 400 V betrieben wird.

8. Verfahren nach einem der Ansprüche 1 bis 7,
**dadurch gekennzeichnet, dass** die Elektroden (8, 10) für den Schweißvorgang mit einer Anpresskraft (F) beaufschlagt werden, die im Bereich von 0,75 bis 8,0 KN liegt.

9. Verfahren nach einem der Ansprüche 1 bis 8,
**dadurch gekennzeichnet, dass** Schweißparameter, insbesondere Stromimpuls (30) und/oder Anpresskraft (F), derart vorgegeben werden, dass durch den Schweißvorgang die Bauteile (22, 24) über einen verschmolzenen Schweißpunkt (26) verbunden werden, der - im Bauteil-Querschnitt gesehen - eine zu einer Bauteil-Verbindungsebene (52) symmetrische und beidseitig konkave Doppelsichelform aufweist.

10. Verfahren nach Anspruch 9,
**dadurch gekennzeichnet, dass** die Schweißparameter so vorgegeben werden, dass der entstehende Schweißpunkt (26) bezüglich einer Draufsicht einer verschmolzenen Zone (53) der Bauteile (22, 24) durchgehend kreisförmig oder kreisringförmig mit einer zentrischen, nicht verschmolzenen Innenzone (54) ausgebildet ist.

11. Verfahren nach Anspruch 9 oder 10,
**dadurch gekennzeichnet, dass** die Schweißparameter derart gewählt werden, dass die Bauteile (22, 24) im Kontaktbereich der Elektroden (8, 10) durch den Stromimpuls (30) - bezogen auf eine Draufsicht des Schweißpunktes (26) - radial von außen nach innen erhitzt und aufgeschmolzen werden, wobei ein innerer Bereich des Schweißpunktes (26) schmelzverbindungsfrei bleibt oder durchgehend verschmolzen wird.

12. Punktschweißzange (1), insbesondere zur Anwendung des Verfahrens nach einem der Ansprüche 1 bis 11, bestehend aus einer Basiseinheit (2) insbesondere zur im Raum beweglichen Aufhängung, wobei die Basiseinheit (2) zwei Elektrodenarme (4, 6) mit endseitigen Schweißelektroden (8, 10) aufweist, **gekennzeichnet durch** eine Steuerung (18) zur Erzeugung eines Schweißstromes (i) **durch** Kondensatorentladung als Stromimpuls (30) mit einer Impulsdauer (T) von über 10 Millisekunden, insbesondere mindestens 15 Millisekunden.

13. Punktschweißzange nach Anspruch 12,
**dadurch gekennzeichnet, dass** die Steuerung (18) Mittel zum Erzeugen eines Entladespannungsimpulses (u) durch Kondensatorentladung aufweist, wobei der Entladespannungsimpuls (u) über einen in der Basiseinheit (2) angeordneten Schweißtransformator (12) in den Stromimpuls (30) für die Elektroden (8, 10) umgeformt wird.

14. Punktschweißzange nach Anspruch 12 oder 13,
**dadurch gekennzeichnet, dass** die Steuerung (18)Mittelzum Einstellen einer Kondensator-Ladespannung in einem Bereich bis zu maximal 500 V aufweist.

15. Punktschweißzange nach Anspruch 13 oder 14,
**dadurch gekennzeichnet, dass** der Schweißtransformator (12) eine Leistung im Bereich von 120 bis 180 kVA, insbesondere 150 kVA, aufweist.

16. Punktschweißzange nach einem der Ansprüche 12 bis 15,
**dadurch gekennzeichnet, dass** dieSteuerung(18)mitder Basiseinheit (2) über flexible elektrische Leitungen (14, 16) verbunden ist.

17. Punktschweißzange nach einem der Ansprüche 12 bis 16,
**dadurch gekennzeichnet, dass** die Steuerung (18) eine Kondensator-Anordnung (32) mit einer Lade- und Entladebeschaltung (34) aufweist.

18. Punktschweißzange nach einem der Ansprüche 12 bis 17,
**dadurch gekennzeichnet, dass** die Steuerung (18) zum Erzeugen des Stromimpulses (30) als Wechselimpuls eine zweiteilige Kondensator-Anordnung (32) mit zwei Kondensatorbänken (32a und 32b) aufweist, wobei die Kondensatorbänke (32a, 32b) mit zwei Entladeschaltern (36a, 36b) derart verbunden sind, dass sie nacheinander mit gegensinniger Polarität ihrer Entladespannungen entladbar sind.

19. Punktschweißzange nach Anspruch 17 oder 18,
**dadurch gekennzeichnet, dass** die Lade- und Entladebeschaltung (34) als Entladeschalter (36a, b) Thyristoren aufweist.

20. Punktschweißzange nach einem der Ansprüche 12 bis 19,
**dadurch gekennzeichnet, dass** die Steuerung (18) eingangsseitig Speisespannungsanschlüsse (44) für eine vorzugsweise dreiphasige Eingangs-Netzspannung von maximal 400 V insbesondere mit einer 32 A - Absicherung (46) aufweist.

21. Schweißverbindung von metallischen Bauteilen (22, 24) über einen - insbesondere unter Anwendung des Verfahrens nach einem der Ansprüche 1 bis 11 und/oder mittels der Punktschweißzange (1) nach einem der Ansprüche 12 bis 20 erzeugten - Schweißpunkt (26),
**dadurch gekennzeichnet, dass** derSchweißpunkt(26)-in einem zu einer Bauteil-Verbindungsebene (52) senkrechten Bauteil-Querschnitt gesehen - eine Verschmelzzone (53) mit einer zur Verbindungsebene (52) symmetrischen und beidseitig konkaven Doppelsichelform aufweist.

22. Schweißverbindung nach Anspruch 21,
**dadurch gekennzeichnet, dass** die Verschmelzzone (53) des Schweißpunktes (26) - in einer Draufsicht der Bauteile (22, 24) gesehen - durchgehend kreisförmig oder kreisringförmig mit einer zentrischen, nicht verschmolzenen Innenzone (54) ausgebildet ist.
